# EUROPEAN PATENT SPECIFICATION

(11) **EP 2 550 436 B1**
(45) Date of publication and mention of the grant of the patent: **07.08.2019**
(21) Application number: 11760095.7
(22) Date of filing: 22.03.2011
(51) Int. Cl.: F01K 27/02, F01K 25/02, F01K 23/16, F01K 23/08, F01K 25/10, F01K 23/04

(54) **HEAT ENGINES WITH CASCADE CYCLES**
WÄRMEMOTOREN MIT KASKADIERENDEN ZYKLEN
MOTEURS THERMIQUES AVEC CYCLES EN CASCADE

(30) Priority: 29.11.2010 US 417775 P; 23.03.2010 US 316507 P
(43) Date of publication of application: 30.01.2013
(73) Proprietor: Echogen Power Systems LLC, Akron, Ohio 44311 (US)
(72) Inventor: HELD, Timothy J., Akron Ohio 44333 (US); VERMEERSCH, Michael L., Hamilton Ohio 45011 (US); XIE, Tao, Copley, Ohio 44321 (US); MILLER, Jason D., Hudson Ohio 44236 (US)
(74) Representative: Haseltine Lake Kempner LLP
(86) International application number: PCT/US2011/029486
(87) International publication number: WO 2011/119650

(56) References cited:
- EP-A2- 0 286 565
- WO-A1-2009/045196
- WO-A2-2010/017981
- JP-A- 2005 533 972
- KR-B1- 100 191 080
- US-A- 3 971 211
- US-A- 5 754 613
- US-A1- 2005 072 182

## Description

### Technical Area

The present invention relates to a working fluid circuit for waste heat recovery and to a method of recovering waste heat in a working fluid circuit.

### Background

Heat is often created as a byproduct of industrial processes where flowing streams of liquids, solids or gasses that contain heat must be exhausted into the environment or otherwise removed from the process an effort to maintain the operating temperatures of the industrial process equipment. Sometimes the industrial process can use heat exchanging devices to capture the heat and recycle it back into the process via other process streams. Other times it is not feasible to capture and recycle this heat because it is either too low in temperature or there is no readily available means to use as heat directly. This type of heat is generally referred to as "waste" heat, and is typically discharged directly into the environment through, for example, a stack, or indirectly through a cooling medium, such as water. In other settings, such heat is readily available from renewable sources of thermal energy, such as heat from the sun (which may be concentrated or otherwise manipulated) or geothermal sources. These and other thermal energy sources are intended to fall within the definition of "waste heat," as that term is used herein.

Waste heat can be utilized by turbine generator systems that employ thermodynamic methods, such as the Rankine cycle, to convert heat into work. Typically, this method is steam-based, wherein the waste heat is used to raise steam in a boiler to drive a turbine. However, at least one of the key short-comings of a steam-based Rankine cycle is its high temperature requirement, which is not always practical since it generally requires a relatively high temperature (316°C (600°F) or higher) waste heat stream or a very large overall heat content. Also, the complexity of boiling water at multiple pressures/temperatures to capture heat at multiple temperature levels as the heat source stream is cooled is costly in both equipment cost and operating labor. Furthermore, the steam-based Rankine cycle is not a realistic option for streams of small flow rate and/or low temperature.

The organic Rankine cycle (ORC) addresses the short-comings of steam-based Rankine cycles by replacing water with a lower boiling-point fluid, such as a light hydrocarbon like propane or butane, or a HCFC {e.g., R245fa) fluid. However, the boiling heat transfer restrictions remain, and new issues such as thermal instability, toxicity or flammability of the fluid are added.

To address these short-comings, supercritical CO2 power cycles have been used. The supercritical state of the CO2 provides improved thermal coupling with multiple heat sources. For example, by using a supercritical fluid, the temperature glide of a process heat exchanger can be more readily matched. However, single cycle supercritical CO2 power cycles operate over a limited pressure ratio, thereby limiting the amount of temperature reduction, i.e., energy extraction, through the power conversion device (typically a turbine or positive displacement expander). The pressure ratio is limited primarily due to the high vapor pressure of the fluid at typically available condensation temperatures {e.g., ambient). As a result, the maximum output power that can be achieved from a single expansion stage is limited, and the expanded fluid retains a significant amount of potentially usable energy. While a portion of this residual energy can be recovered within the cycle by using a heat exchanger as a recuperator, and thus preheating the fluid between the pump and waste heat exchanger, this approach limits the amount of heat that can be extracted from the waste heat source in a single cycle.

Accordingly, there exists a need in the art for a system that can efficiently and effectively produce power from not only waste heat, but also from a wide range of thermal sources.

Document US3971211 discloses a gas turbine, steam turbine and/or process steam systems combined with supercritical carbon dioxide cycle engines to produce major improvements in net plant efficiency by using the heat inputs and outputs of the supercritical CO2 cycle to supply or remove heat in advantageous ways to the gas turbine, steam turbine and/or process steam systems.

Document WO2010/017981 discloses an operating fluid for a vapour circuit processing device having a vapour generator, an expander, a condenser and a reservoir for the operating fluid, comprising a working medium which vaporizes in the vapour generator as a result of heat being supplied, carries out mechanical work in the vapour phase through relaxation in the expander and condenses in the condenser, and an ionic fluid which mixes with the working medium, with the melting point of the mixture being below -5 °C.

### Summary

The present disclosure is in the general field of thermodynamics and energy conversion, and more particularly applicable to conversion of thermal energy to work. The present disclosure improves the efficiency of a supercritical CO2 power cycle by "cascading" the residual energy back to a higher pressure fluid source, and expanding this fluid through an additional power conversion device. In addition, the unique characteristics of the CO2 cycle require active management of the main pump suction pressure and temperature relationship to provide optimal cycle efficiency. The present disclosure includes equipment and control strategies that enable superior performance to be achieved with the cascade CO2 cycle described herein.

According to the present invention, there is provided a working fluid circuit for waste heat recovery having the features of claim 1 below.

Optional features of the invention are set out in dependent claims 2 to 7 below.

According to the present invention, there is provided a method of recovering waste heat in a working fluid circuit having the features of claim 8 below.

Optional features of the method are set out in dependent claims 9 to 12 below.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.
Figure 1 is a schematic of a simple thermodynamic waste heat recovery cycle according to the background art.
Figure 2 is a schematic of an embodiment of a cascade thermodynamic waste heat recovery cycle, according to one or more embodiments disclosed.
Figure 3 is a schematic of another cascade thermodynamic waste heat recovery cycle, according to one or more embodiments disclosed.
Figure 4 is a schematic of another cascade thermodynamic waste heat recovery cycle, according to one or more embodiments disclosed.
Figure 5 is a schematic of another cascade thermodynamic waste heat recovery cycle, according to one or more embodiments disclosed.
Figure 6 is a schematic of a mass management system (MMS) which can be used in connection with the disclosed cascade thermodynamic waste heat recovery cycles, according to one or more embodiments disclosed.
Figure 7 is a schematic of another mass management system (MMS) which can be used in connection with the disclosed cascade thermodynamic waste heat recovery cycles, according to one or more embodiments disclosed.
Figures 8 and 9 schematically illustrate different system arrangements for inlet chilling of a separate fluid stream (e.g., air) by utilization of the working fluid which can be used in the exemplary heat engine cycles disclosed herein.
Figure 10 illustrates an exemplary waste heat recovery system including a mass management system, according to one or more embodiments disclosed.

### Detailed Description

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention which is solely defined by appended independent claims. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various Figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, *i.e.*, any element from one exemplary embodiment may be used in any other exemplary embodiment, without departing from the scope of the invention, as long as the resulting embodiment contains at least all features of at least one of the independent claims.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Additionally, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Furthermore, as it is used in the claims or specification, the term "or" is intended to encompass both exclusive and inclusive cases, *i.e.*, "A or B" is intended to be synonymous with "at least one of A and B," unless otherwise expressly specified herein.

The disclosure is made with reference to various embodiments as schematically depicted by the accompanying Figures. It should be noted that representative operative temperatures, pressures, and flow rates are indicated as examples only and are not in any way limiting to the scope of the disclosure.

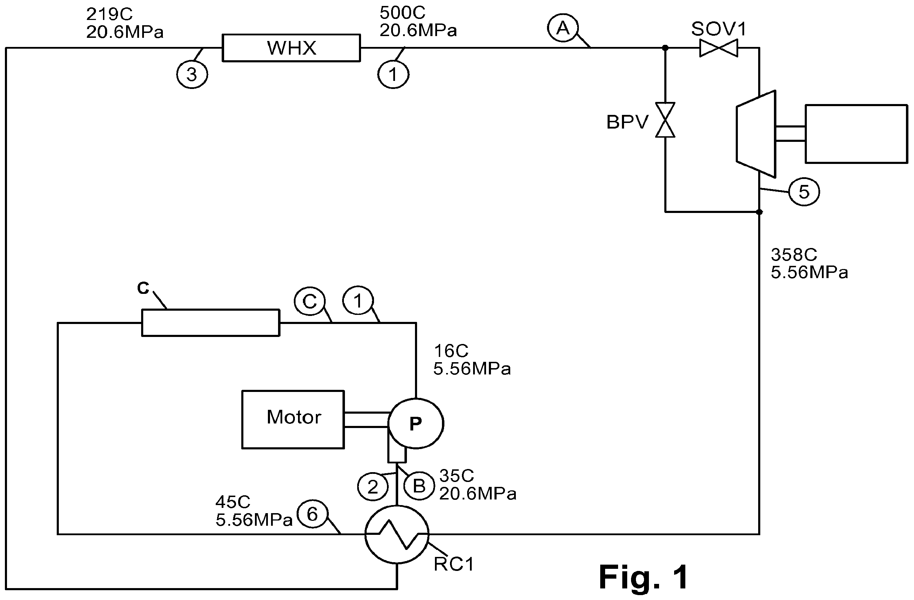

Figure 1 illustrates a baseline recuperated "simple" thermodynamic cycle according to the background art wherein a working fluid, such as supercritical CO₂, is pumped through a working fluid circuit in thermal communication with a waste heat exchanger WHX. A power turbine PT is fluidly coupled to the waste heat exchanger WHX downstream thereof. The working fluid is subsequently expanded in the power turbine PT in order to generate power or work. It will be appreciated, that the power turbine PT may include any type of expansion device without departing from the scope of the disclosure. The working fluid is cooled at a recuperator RC1 and returned to a low temperature state at a condenser C. The working fluid is then directed to a pump P to commence the fluid circuit anew. Depending upon the achievable temperature at the suction inlet of the pump P, and based on the available cooling supply temperature and condenser C performance, the suction pressure at the pump P may be either subcritical or supercritical. As will be described in more detail below, a "mass management system" may also be included in each of the working fluid circuits disclosed to add or remove working fluid (*i.e.*, mass) from the system, and thereby make the system more efficient by increasing the overall system pressure ratio to the maximum possible extent while maintaining pump suction pressure at an acceptable level.

Subsequently, embodiments of the invention are described, wherein each embodiment of the invention comprises at least all features of at least one of the appended independent claims.

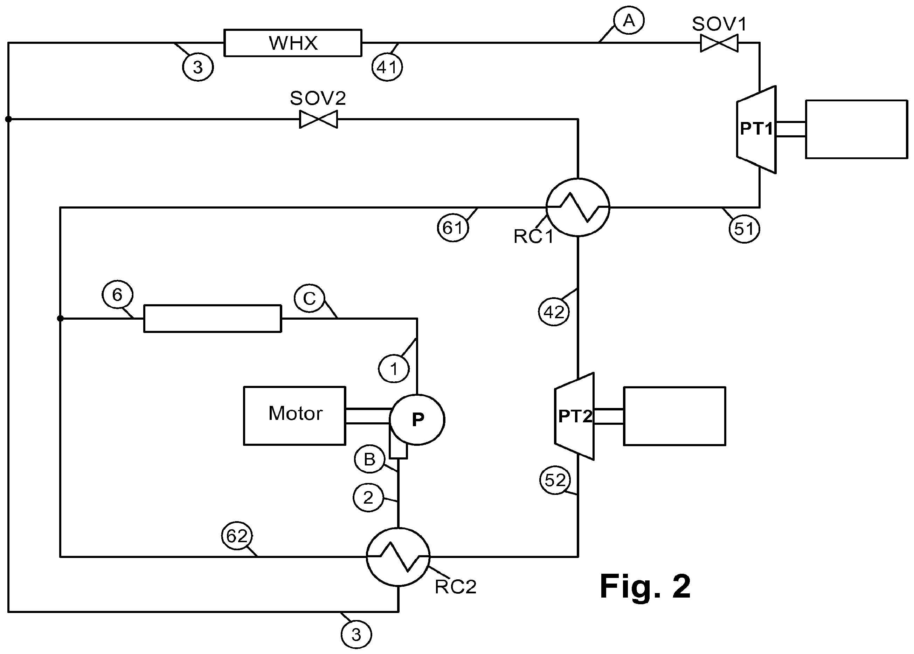

Figure 2 schematically illustrates an exemplary embodiment of a "cascade" cycle in which the residual energy following the first-stage power turbine PT1 (*i.e.*, state 51) is used to preheat additional high pressure working fluid, or a downstream portion of the working fluid, to a temperature within approximately 5 to 10°C of the fluid at state 51. The downstream portion of the working fluid may subsequently be expanded through a second power turbine PT2 (or second stage turbine) adapted to drive a work-producing device. In one embodiment, the work-producing device may be an electrical generator either coupled by a gearbox or directly driving a high-speed alternator. It is also possible to connect the output of PT2 with the work-producing device, or generator, being driven by PT1. In other embodiments, the first and second stage power turbines PT1, PT2 may be integrated into a single piece of turbomachinery, such as a multiple-stage turbine using separate blade/disks on a common shaft, or as separate stages of a radial turbine driving a bull gear using separate pinions for each radial turbine.

The remainder of the cycle in Figure 2 may be substantially similar to the recuperated form of the cycle shown in Figure 1, with the exception that the discharge from both recuperators RC1 and RC2 may be combined together to enter the condenser C. That is, exhaust from the second power turbine PT2 may pass through a second recuperator RC2 in order to reduce the temperature of the separated portion of the working fluid prior to being recombined with the remaining portion of working fluid preceding the condenser C. Pump P provides fluid pressure to flow the working fluid through the working fluid circuit of the cycle.

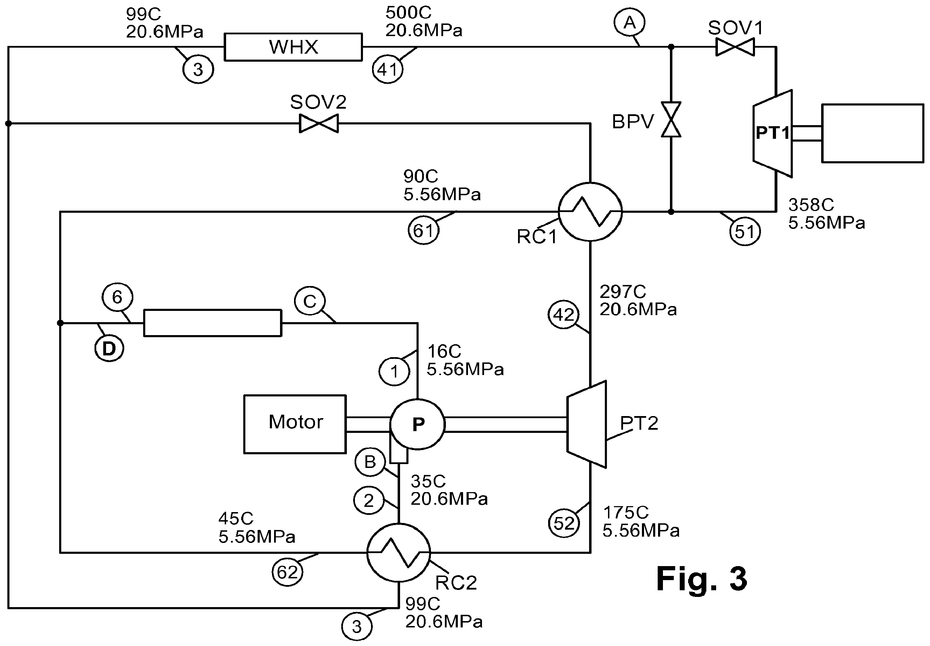

Each of the recuperators RC1, RC2 and condensers C disclosed in Figure 2, and those disclosed below in Figures 3-5, may, in at least one embodiment, include or employ one or more printed circuit heat exchange panels. Such heat exchangers and/or panels are known in the art, and are described in U.S. Pat. Nos. 6,921,518; 7,022,294; and 7,033,553, the contents of which are incorporated by reference to the extent consistent with the present disclosure.

By using multiple turbines PT1, PT2 at similar pressure ratios, a larger fraction of the available heat source from the waste heat exchanger WHX is utilized and residual heat from the turbines PT1, PT2 is recuperated. Consequently, additional heat is extracted from the waste heat source through multiple temperature expansions. As can be appreciated, using multiple turbines PT1, PT2 at similar pressure ratios utilizes a larger spectrum of the available heat source and the residual heat from each turbine PT1, PT2 can be recuperated and combined with any residual waste heat.

In one or more embodiments, the arrangement of the recuperators RC1, RC2 in any of the embodiments disclosed herein can be optimized in conjunction with the waste heat exchanger WHX to maximize power output of the multiple temperature expansion stages. Also, both sides of each recuperator RC1, RC2 can be balanced, for example, by matching heat capacity rates and selectively merging the various flows in the working fluid circuits through waste heat exchangers and recuperators; C = m • cₚ, where C is the heat capacity rate, m is the mass flow rate of the working fluid, and cₚ is the constant pressure specific heat. As appreciated by those skilled in the art, balancing each side of the recuperators RC1, RC2 provides a higher overall cycle performance by improving the effectiveness of the recuperators RC1, RC2 for a given available heat exchange surface area.

The waste heat exchanger(s) WHX used in the various embodiments disclosed herein may be any type of waste heat exchange device or medium operative to transfer thermal energy from a waste heat source or other heat source to the working fluid. In at least one embodiment, the waste heat exchanger WHX may include a printed circuit heat exchanger.

Figure 3 is similar to Figure 2, but with one key exception. In Figure 3, the second power turbine PT2 may be coupled to the pump P either directly or through a gearbox. The motor that drives the pump P may still be used to provide power during system startup, and may provide a fraction of the drive load for the pump P under some conditions. In other cases, however, it is possible to utilize the motor as a generator, particularly if the second power turbine PT2 is able to produce more power than the pump P requires for system operation.

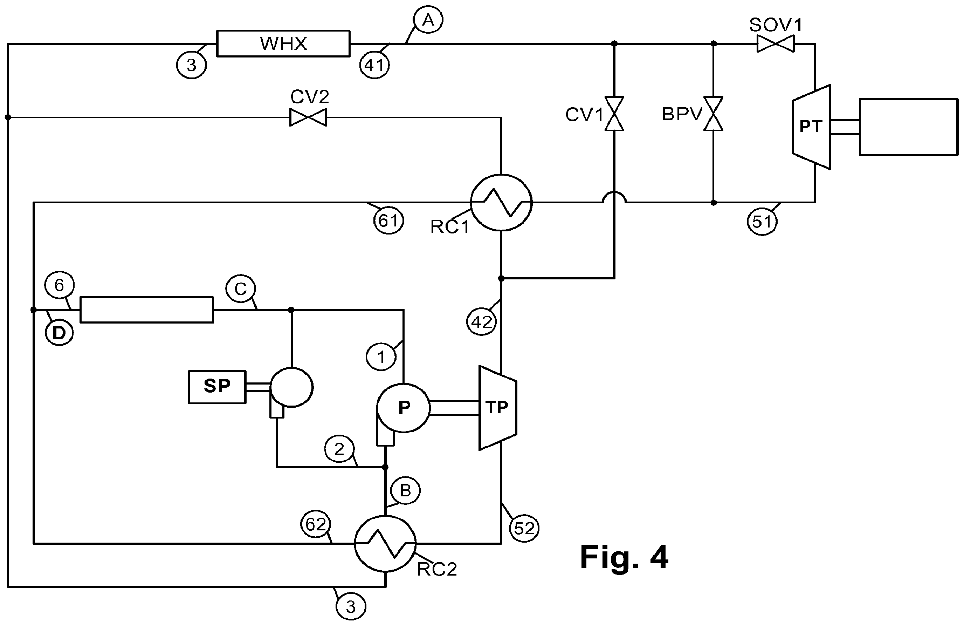

Figure 4 is a variation of the system of Figure 3, whereby the motor-driven pump P is replaced by or operatively connected to a high-speed, direct-drive turbopump TP. As illustrated, a small "starter pump" SP or other pumping device may be used during system startup, but once the turbopump TP generates sufficient power to "bootstrap" itself into steady-state operation, the starter pump SP can be shut down. Additional control valves CV1 and CV2 may be included to facilitate operation of the turbopump TP under varying load conditions. The additional control valves CV1, CV2 may also be used to get heat into the turbopump TP before the main power turbine PT has started. For example, at system startup the shut off valve SOV1 may be closed and the first control valve CV1 opened such that the heated working fluid discharged from the waste heat exchanger WHX may be directed to the turbopump TP in order to drive the system pump P until achieving steady-state operation. Once at steady-state operation, the control valve CV1 may be closed and simultaneously open the shut off valve SOV1 in order to direct heated working fluid from the waste heat exchanger WHX to the power turbine PT.

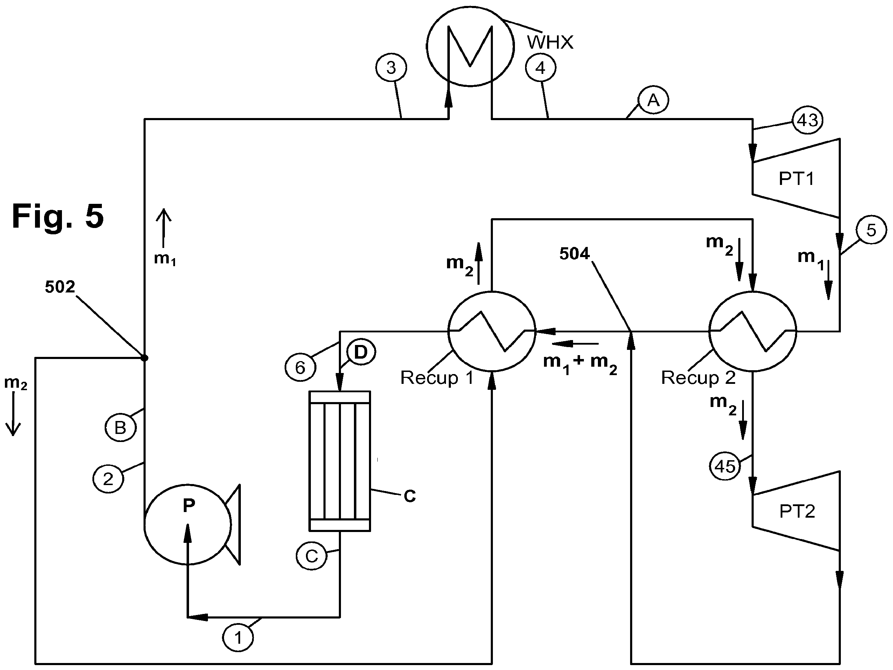

Figure 5 schematically illustrates an exemplary embodiment of a dual cascade cycle which can be implemented in a heat engine cycle. Following the pump P, the working fluid may be separated at point 502 into a first portion m₁ and a separated portion m₂. The first portion m₁ may be directed to the waste heat exchanger WHX and subsequently expanded in the first stage power turbine PT1. Residual energy in the exhaust working fluid m₁ following the first stage power turbine PT1 (*e.g*., state 5) may be used to preheat the separated portion m₂ in a second recuperator (Recup2) after the separated portion m₂ has previously passed through a first recuperator Recup1 to thereby increase its temperature. In one embodiment, the second recuperator (Recup2) may be configured to preheat the separated portion m₂ to a temperature within approximately 5 to 10°C of the exhaust working fluid m₁ fluid at state 5. The separated portion m₂ at state 45 may be subsequently expanded through a second-stage power turbine PT2 and thereafter re-combine with the first portion m₁ at point 504. The re-combined working fluid m₁ + m₂ may then be directed to a loop including a first recuperator (Recup1), a condenser (*e.g*., state 6), and a working fluid pump P (*e.g*., state 1).

In all of the fluid circuit embodiments disclosed herein, and any equivalents thereof, an optional bypass loop can be included whereby all or some of the working fluid can be directed through the bypass loop and not into one or more of the recuperators RC1, RC2. By providing this flexibility to the system, the operator or control system can monitor and control operation according to the amount of heat available at one or more locations within the system, and thereby maximize efficiency.

As briefly mentioned above, the working fluid circulated in each of the exemplary cycles described herein may be carbon dioxide. Carbon dioxide is a greenhouse friendly and neutral working fluid that offers benefits such as non-toxicity, non-flammability, easy availability, low price, and no need of recycling. It should be noted that the use of the term "carbon dioxide" is not intended to be limited to a carbon dioxide of any particular type, purity, or grade. For example, in at least one embodiment industrial grade carbon dioxide may be used.

In other embodiments, the working fluid circulated in each of the exemplary cycles described herein may a binary, ternary, or other working fluid blend. The working fluid combination can be selected for the unique attributes possessed by the fluid combination within a heat recovery system, as described herein. For example, one such fluid combination includes a liquid absorbent and carbon dioxide mixture enabling the combined fluid to be pumped in a liquid state to high pressure with less energy input than required to compress CO₂. In another embodiment, the working fluid may be a combination of carbon dioxide or supercritical carbon dioxide and one or more other miscible fluids or chemical compounds. In yet other embodiments, the working fluid may be a combination of carbon dioxide and propane, or carbon dioxide and ammonia, without departing from the scope of the disclosure.

In the exemplary fluid cycles described herein, the working fluid may be in a supercritical state over certain portions of the system (the "high pressure side"), and in a subcritical state over other portions of the system (the "low pressure side"). In other embodiments, the entire fluid cycle may be operated such that the working fluid is in a supercritical or subcritical state during the entire execution of the cycle.

Using the term "working fluid" is not intended to limit the state or phase of matter that the working fluid is in. In other words, the working fluid may be in a fluid phase, a gas phase, a supercritical phase, a subcritical state, or any other phase or state at any one or more points within the fluid cycle. For example, in one embodiment the pressure at the inlet of the pump P exceeds the vapor pressure of the working fluid by a margin sufficient to prevent vaporization of the fluid at the local regions of the low pressure and/or high velocity. This is especially important with high speed pumps such as the turbopumps used in the various embodiments disclosed herein. Consequently, a traditional passive system, such as one that employs a surge tank which only provides the incremental pressure of gravity relative to the fluid vapor pressure, is insufficient for the embodiments disclosed herein.

The use of carbon dioxide in power cycles requires particular attention to minimize the suction pressure of the pump P due to several factors. One factor is carbon dioxide's near-ambient critical temperature which requires the suction pressure of the pump P to be controlled both above and below the critical pressure (*e.g*., subcritical and supercritical operation). Another factor to consider is carbon dioxide's relatively high compressibility which makes the volumetric and overall pump efficiency more sensitive to suction pressure margin than other working fluids. At least one more factor is carbon dioxide's low overall pressure ratio which makes the cycle efficiency more sensitive to suction pressure margin.

In order to minimize the suction pressure of the pump P, among other benefits, embodiments of the disclosure further include the incorporation and use of a mass management system ("MMS") in connection with or integrated into the described thermodynamic fluid cycles. The MMS may be configured to control the inlet pressure at the pump P by adding and/or removing mass from the system, and this in turn makes the system more efficient by increasing the overall system pressure ratio to the maximum possible extent. In at least one embodiment, the MMS operates with the system semi-passively. For example, the MMS may use sensors to monitor pressures and temperatures within the high pressure side (from pump P outlet to turbine PT1 inlet) and low pressure side (from turbine PT1 outlet to pump P inlet) of the system. The MMS may also include valves, tank heaters, pumps, or other equipment to facilitate the movement of the working fluid into and out of the system and a mass control tank for storage of working fluid.

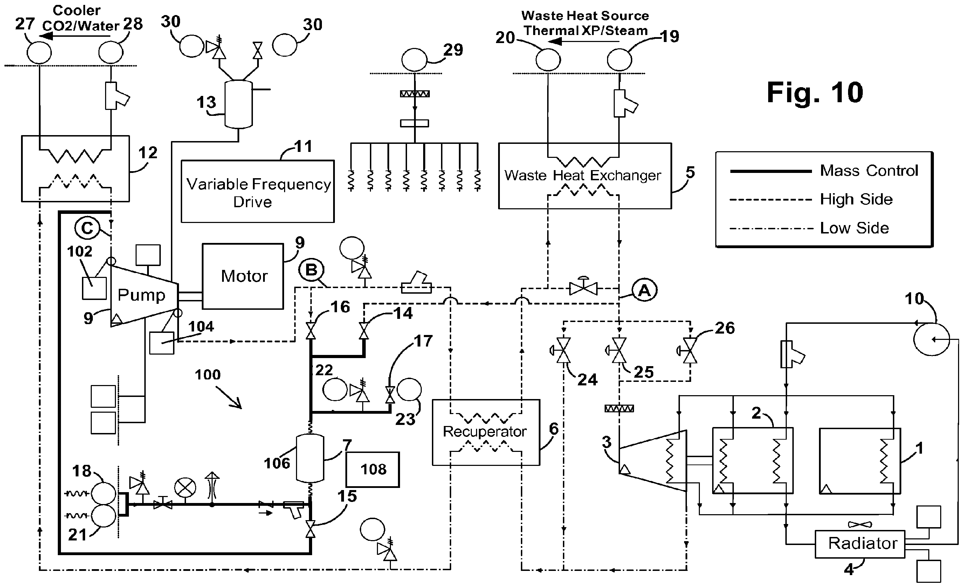

Referring to Figure 10, illustrated is an exemplary embodiment of a waste heat recovery system that includes a MMS 100 having a plurality of valves 14, 15, 16, 17, 18, 21, 22, and 23, a mass control tank 7, and a control system 108. The MMS 100 is operatively connected to the waste heat recovery system at the valves or termination points 14, 15, 16, 17, 18, 21, 22, and 23. In one embodiment, the MMS 100 is adapted to remove higher pressure and denser working fluid (relative to the pressure, temperature, and density on the low pressure side of the system) from the thermodynamic cycle via valve 16. The MMS 100 may dispense working fluid into the waste heat recovery system via valve 15. The MMS 100 automatically pressurizes the mass control tank 7 by opening valve 14 until the pressure within mass control tank 7 is sufficient to inject fluid through valve 15. By controlling the operation of the valves 14, 15, 16, the MMS 100 adds and/or removes mass (*i.e.*, working fluid) to/from the waste heat recovery system without the need of a pump, thereby reducing system cost, complexity, and maintenance.

In the illustrated embodiment, the MMS 100 includes a mass control tank 7 that may be filled with working fluid. The tank 7 may be in fluid communication with valves 14, 16 such that opening either or both valves 14, 16 will deliver working fluid to the top of the mass control tank 7. The mass control tank 7 may also be in fluid communication with the valve 15 such that opening the valve 15 will remove working fluid from the bottom of the mass control tank 7 to be injected into the waste heat recovery system adjacent and preceding the pump 9. Within the mass control tank 7 the working fluid may be in liquid phase, vapor phase, or both, or in a supercritical state; if the working fluid is in both vapor phase and liquid phase, a phase boundary may separate the two phases whereby the denser working fluid settles at the bottom of the mass control tank 7. Consequently, the working fluid contained within the mass control tank 7 will tend to stratify with the higher density working fluid at the bottom of the tank 7 and the lower density working fluid at the top of the tank 7. In this way, the valve 15 will be able to deliver to the waste heat recovery system the densest working fluid from within the mass control tank 7.

A first set of sensors 102 may be arranged at the suction inlet of the pump 9 and be configured to measure and report the temperature, pressure, and mass flow rate of the working fluid at that point in the system. A second set of sensors 104 may be arranged at or adjacent the outlet of the pump 9 and configured to measure and report the temperature, pressure, and mass flow rate of the working fluid at that point in the system. A third set of sensors 106 may communicate with the mass control tank 7 and be configured to measure and report the pressure and temperature of the working fluid within the tank 7. Each set of sensors 102, 104, 106 may be in communication (wired and/or wireless) with a control system 108 that is also in communication with each of the valves 14, 15, 16 via actuators, servos, or other devices capable of manipulating the general disposition (*i.e.*, open/closed) of each valve 14, 15, 16. Accordingly, the control system 108 may receive the measurement communications from each set of sensors 102, 104, 106 and adjust each valve 14, 15, 16 in order to maximize operation of the waste heat recovery system. Moreover, the first set of sensors 102 may correspond to location 1 in Figures 1-5, and the second set of sensors 104 may correspond to location 2 in Figures 1-5.

The exemplary MMS 100 may also include points 18 and 19 used to purge and/or fill working fluid to/from the waste heat recovery system. Point 17 may be used to vent working fluid from the MMS 100, and other illustrated equipment is used in a variety of operating conditions such as start up, charging, and shut-down of the waste heat recovery system. A more detailed description of the other illustrated equipment may be found in copending U.S. patent application serial no. 12/631,379 entitled "Heat Engine and Heat to Electricity Systems and Methods," filed on December 4, 2009, the contents of which are hereby incorporated by reference to the extent consistent with the present disclosure.

Operation of the exemplary MMS 100 follows. When the working fluid, such as CO₂, in the mass storage tank 7 is at the fluid vapor pressure for a given ambient temperature, and the low side pressure in the waste heat recovery system is above the vapor pressure, the pressure in the mass control tank 7 must be increased to allow for the addition of mass into the waste heat recovery system. This can be controlled by opening valve 14 and thereby allowing higher pressure, higher temperature, lower density working fluid, such as supercritical CO₂, to flow into the mass control tank 7. Valve 15 may be opened to allow higher density liquid working fluid at the bottom of the mass control tank 7 to flow into the waste heat recovery system and thereby increase the suction pressure of the pump 9.

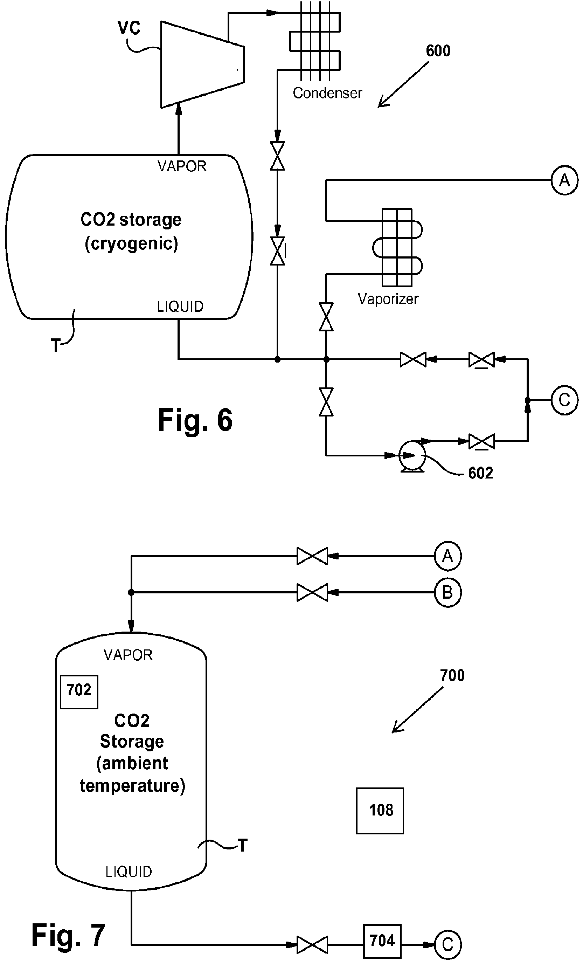

The description of the foregoing MMS 100 may be equally applicable as a supplement to the various thermodynamic cascade cycles disclosed herein, and shown generally in Figures 1-5. For example, referring now to Figures 6 and 7, Figure 7 schematically illustrates a mass management system 700 substantially similar to the MMS 100 shown in Figure 10, and Figure 6 schematically illustrates another exemplary mass management system 600. System tie-in points A, B, and C as shown in Figures 6, 7 and 10 (only points A and C shown in Figure 6) correspond to the system tie-in points A, B, and C shown in Figures 1-5. Accordingly, MMS 600 and 700 may each be fluidly coupled to the cascade cycled of Figures 1-5 at the corresponding system tie-in points A, B, and C (if applicable). The MMS 600 stores a working fluid at low (sub-ambient) temperature and therefore low pressure, and MMS 700 stores a working fluid at or near ambient temperature. As discussed above, the working fluid may be CO₂, but may also be other working fluids without departing from the scope of the disclosure.

Where a working fluid pump P is indicated in each of the described cascade cycles of Figures 1-5, working fluid is supplied as necessary from a mass control tank T (Figures 6 and 7) to an inlet of the pump P. In operation, the MMS 700 works by selectively adding working fluid to the main loop of the cascade cycle by pressurizing the working mass control tank T and then opening a valve at the bottom of the mass control tank T to flow into the rest of the cycle through interface or system tie-in C. For example, the mass control tank T in Figure 7 may be pressurized by opening the valve at or adjacent interface A, and liquid may be released from the mass control tank T by opening the valve at or adjacent interface C. This process raises the system pump inlet pressure at pump P in Figures 1-5. To extract fluid from the main system loop, and decrease the system pump inlet pressure, the valve at interface B (Figure 7) may be opened, thereby permitting cool, pressurized fluid to enter the mass control tank T.

In the embodiment of Figure 6, the MMS 600 uses only two system tie-ins or interface points A and C. The valve-controlled interface A is not used during the control phase, and is provided only to pre-pressurize the main fluid loop with vapor so that the temperature of the main fluid loop remains above a minimum threshold during fill. In operation, when the suction pressure of the pump P shown in Figures 1-5 needs to be increased, working fluid is selectively added to the main system loop by pumping it in with a transfer pump 602 provided at or proximate interface C. When the suction pressure of the pump P needs to be decreased, liquid is selectively extracted from the system at interface C and expanded through one or more valves down to the relatively low storage pressure. Under most conditions, the expanded fluid will be two-phase (*i.e.*, vapor + liquid). To prevent the pressure in the mass control tank T from exceeding its normal operating limits, a small vapor compression refrigeration cycle (vapor compressor VC) is provided to decrease the fluid temperature and sufficiently condense the vapor to maintain the pressure of the mass control tank T at its design condition. The vapor compression refrigeration cycle may be integrated within the CO₂ storage tank system, or may be a standalone vapor compression cycle with an independent refrigerant loop.

Although not necessary in every application, the MMS 700 may also include a transfer pump 704, substantially similar to the transfer pump 602 of Figure 6. The transfer pump 704 may be configured to remove working fluid from the tank T and inject it into the working fluid circuit.

All of the various described controls or changes to the working fluid environment and status throughout the cascade cycle, including temperature, pressure, flow direction and rate, and component operation such as pumps and turbines, may be monitored and/or controlled by a control system 108, as generally described above with reference to Figures 6, 7, and 10. In one embodiment, the control system 108 may include one or more proportional-integral-derivative (PID) controllers as control loop feedback systems. In another embodiment, the control system 108 may be any microprocessor-based system capable of storing a control program and executing the control program to receive sensor inputs and generate control signals in accordance with a predetermined algorithm or table. For example, the controller may be a microprocessor-based computer running a control software program stored on a compute readable medium. The software program may be configured to receive sensor inputs from various pressure, temperature, flow rate, etc. sensors positioned throughout the system and generate control signals therefrom, wherein the control signals are configured to optimize and/or selectively control the operation of the system.

Each MMS 600, 700 may be communicably coupled to such a control system 108 such that control of the various valves and other equipment is automated or semi-automated and reacts to system performance data obtained via the various sensors located throughout the system, and also reacts to ambient and environmental conditions. That is to say that the controller 108 may be in communication with each of the components of the MMS 600, 700 and be configured to control the operation thereof to accomplish the function of the system more efficiently. For example, the control system 108 may be in communication (via wires, RF signal, etc.) with each of the valves, pumps, sensors, etc. in the system and configured to control the operation of each of the components in accordance with a control software, algorithm, or other predetermined control mechanism. This may prove advantageous to control temperature and pressure of the working fluid at the inlet of the pump P, to actively increase the suction pressure of the pump P by decreasing compressibility of the working fluid. Doing so may avoid damage to the pump P as well as increase the overall pressure ratio of the cascade cycle, thereby improving the efficiency and power output.

In one or more embodiments, it may prove advantageous to maintain the suction pressure of the pump P above the boiling pressure of the working fluid at the inlet of the pump P. One method of controlling the pressure of the working fluid in the low side of the working fluid circuit is by controlling the temperature of the working fluid in the mass control tank T. This may be accomplished by maintaining the temperature of the mass control tank T at a higher level than the temperature at the inlet of the pump P. To accomplish this, the MMS 600, 700 may include the use of a heater and/or a coil 702 within the tank T (Figure 7). The heater/coil 702 may be configured to add or remove heat from the fluid/vapor within the tank T. In one embodiment, the temperature of the mass control tank T may be controlled using direct electric heat. In other embodiments, however, the temperature of the mass control tank T may be controlled using other devices, such as but not limited to, a heat exchanger coil with pump discharge fluid (which is at a higher temperature than at the pump inlet), a heat exchanger coil with spent cooling water from the cooler/condenser (also at a temperature higher than at the pump inlet), or combinations thereof.

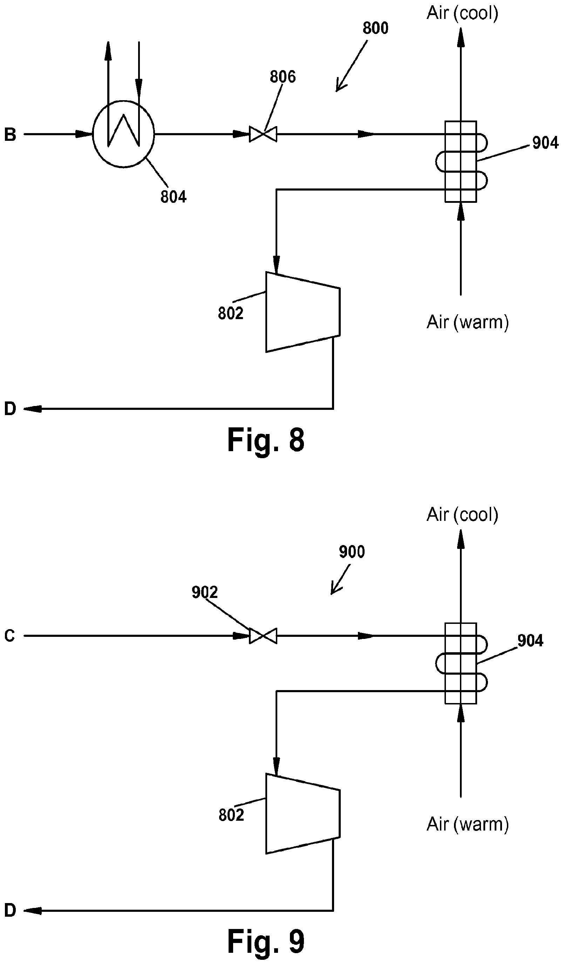

Referring now to Figures 8 and 9, chilling systems 800 and 900, respectively, may also be employed in connection with any of the above-described cycles in order to provide cooling to other areas of an industrial process, including but not limited to pre-cooling of the inlet air of a gas-turbine or other air-breathing engines, thereby providing for a higher engine power output. System tie-in points B and D or C and D in Figures 8 and 9 may correspond to the system tie-in points B, C, and D in Figures 1-5. Accordingly, chilling systems 800, 900 may each be fluidly coupled to the cascade cycles of Figures 1-5 at the corresponding system tie-in points B, C, and/or D (where applicable). In the chilling system 900 of Figure 9, a portion of the working fluid may be extracted from the working fluid circuit at system tie-in C. The pressure of that portion of fluid is reduced through an expansion device 902, which may be a valve, orifice, or fluid expander such as a turbine or positive displacement expander. This expansion process decreases the temperature of the working fluid. Heat is then added to the working fluid in an evaporator heat exchanger 904, which reduces the temperature of a process fluid (*e.g*., air, as shown in Figures 8 and 9). The fluid pressure is then increased through the use of a compressor 802, where it is reintroduced to the working fluid circuit at system tie-in D.

The compressor 802 shown in Figures 8 and 9 may be either motor-driven or turbine-driven off either a dedicated turbine or an additional wheel added to a primary turbine of the system. In other embodiments, the compressor 802 may be integrated with the main working fluid circuit. In other embodiments, the compressor 802 may take the form of a fluid ejector, with motive fluid supplied from system tie-in point A, and discharging to system tie-in point D, upstream from the condenser C. In the chilling system 800 of Figure 8, the compressor 802 may take the form of a fluid ejector, with motive fluid supplied from system tie-in point A (not shown, but corresponding to point A in Figures 1-5), and discharging to system tie-in point D. In another embodiment, the working fluid is extracted from system tie-in point B show in Figure 1-5 and pre-cooled by a heat exchanger 804 prior to expansion in an expansion device 806, similar to the expansion device 902 described above. In one embodiment, the heat exchanger 804 may include a water, air, water-CO₂, or air-CO₂ heat exchanger. As can be appreciated, the addition of the heat exchanger 804 may provide additional cooling capacity relative to the chilling system 900 shown in Figure 9.

Each of the described cascade cycles may be implemented in a variety of physical embodiments, including but not limited to fixed or integrated installations or as a self-contained device such as a portable waste heat engine or "skid" wherein the working fluid circuit and related components such as turbines, recuperators, condensers, pumps, valves, working fluid supply and control systems and mechanical and electronic controls are consolidated as a single unit, as further disclosed and described in the related applications.

The terms "upstream" and "downstream" as used herein are intended to more clearly describe various embodiments and configurations of the disclosure. For example, "upstream" generally means toward or against the direction of flow of the working fluid during normal operation, and "downstream" generally means with or in the direction of the flow of the working fluid curing normal operation.

The foregoing has outlined features of several embodiments so that those skilled in the art may better understand the present disclosure. Those skilled in the art should appreciate that they may readily use the present disclosure as a basis for designing or modifying other processes and structures for carrying out the same purposes and/or achieving the same advantages of the embodiments introduced herein. The present invention is defined by appended claims.

## Claims

1. A working fluid circuit for waste heat recovery, comprising:
a pump (P) operative to direct a working fluid within the working fluid circuit to a waste heat exchanger (WHX) fluidly coupled to the pump;
a first expansion device (PT1) fluidly coupled to the waste heat exchanger and configured to receive the working fluid from the waste heat exchanger;
a first recuperator (RC1) fluidly coupled to the first expansion device and configured to receive the working fluid from the first expansion device and transfer heat from the working fluid to a downstream portion of the working fluid;
a second expansion device (PT2) fluidly coupled to the pump downstream from the pump and configured to receive the downstream portion of the working fluid;
a second recuperator (RC2) fluidly coupled to the second expansion device and configured to receive the downstream portion of the working fluid from the second expansion device;
a condenser (C) fluidly coupled to the first recuperator and the second recuperator, wherein the working fluid discharge from both the first recuperator and the second recuperator are combined prior to entering the condenser; and
a mass management system (100) having a first system tie-in (A) fluidly coupled upstream from the first expansion device and a second system tie-in (C) fluidly coupled upstream from the pump, the mass management system having a mass control tank (7) configured to selectively receive the working fluid from the working fluid circuit via the first system tie-in and to selectively input the working fluid into the working fluid circuit via the second system tie-in.

2. The working fluid circuit of claim 1, wherein the second expansion device (PT2) is configured to drive the pump (P).

3. The working fluid circuit of claim 2, further comprising a starter pump (SP) fluidly coupled to a downstream side of the condenser (C) and a downstream side of the pump (P).

4. The working fluid circuit of claim 1, wherein the working fluid comprises carbon dioxide.

5. The working fluid circuit of claim 4, wherein the working fluid is in a supercritical state through a portion of the working fluid circuit.

6. The working fluid circuit of claim 1, wherein the first and second expansion devices (PT1, PT2) are power turbines.

7. The working fluid circuit of claim 1, wherein the mass management system (100) comprises a system controller (108) configured to sense at least one of a temperature and a pressure in the working fluid circuit, and in response thereto, generate control signals for at least one of a plurality of selectively-actuated valves (14, 15, 16) and/or pumps (9) arranged in the working fluid circuit, the mass management system being configured to maintain a pressure at an inlet of the pump between a low pressure level greater than a saturation pressure of the working fluid and a high pressure level greater than the low pressure level.

8. A method of recovering waste heat in a working fluid circuit, comprising:
pumping a working fluid within the working fluid circuit by a pump (P), the working fluid being separated into a first portion and a separated portion downstream from the pump, wherein the first portion of the working fluid within the working fluid circuit is pumped to a waste heat exchanger (WHX) fluidly coupled to the pump and the separated portion of the working fluid is pumped through a first recuperator (RC1);
transferring thermal energy from the first recuperator to the separated portion of the working fluid;
expanding the first portion of the working fluid in a first expansion device (PT1) fluidly coupled to the waste heat exchanger;
transferring thermal energy from the first portion of the working fluid to the separated portion of the working fluid in a second recuperator (RC2) fluidly coupled to the first expansion device, the second recuperator being configured to receive the separated portion of the working fluid following the first recuperator;
expanding the separated portion of the working fluid in a second expansion device (PT2) configured to receive the separated portion from the second recuperator;
re-combining the first portion and the separated portion of the working fluid to pass through the first recuperator and a condenser (C), the condenser being fluidly coupled to the first recuperator; and
controlling an amount of working fluid mass in the working fluid circuit with a mass management system (100) having a mass control tank (7) fluidly coupled to a first system tie-in (B) and a second system tie-in (C), the first system tie-in being fluidly coupled upstream from the first expansion device and the second system tie-in being fluidly coupled upstream from the pump.

9. The method of claim 8, further comprising:
receiving the working fluid from the working fluid circuit into the mass control tank (7) via the first system tie-in (B); and
inputting the working fluid into the working fluid circuit via the second system tie-in (C).

10. The method of claim 9, further comprising controlling with a control system (108) a flow of working fluid to the working fluid circuit and to the pump (P), the control system being configured to maintain a pressure at an inlet of the pump between a low pressure level greater than a saturation pressure of the working fluid and a high pressure level greater than the low pressure level.

11. The method of claim 8, wherein the working fluid comprises carbon dioxide.

12. The method of claim 11, wherein the working fluid is in a supercritical state through a portion of the working fluid circuit.

## Patentansprüche

1. Arbeitsmittelkreislauf zur Abwärmenutzung, umfassend:
eine Pumpe (P), die dazu dient, ein Arbeitsmittel in einem Arbeitsmittelkreislauf zu einem mit der Pumpe strömungstechnisch verbundenen Abwärmetauscher (WHX) zu leiten;
ein erstes Expansionsorgan (PT1), das mit dem Abwärmetauscher strömungstechnisch verbunden und dafür ausgelegt ist, das vom Abwärmetauscher kommende Arbeitsmittel aufzunehmen;
einen ersten Rekuperator (RC1), der mit dem ersten Expansionsorgan strömungstechnisch verbunden und dafür ausgelegt ist, das vom ersten Expansionsorgan kommende Arbeitsmittel aufzunehmen und die Arbeitsmittelwärme an einen stromabwärtigen Teil des Arbeitsmittels zu übertragen;
ein zweites Expansionsorgan (PT2), das an der Austrittsseite der Pumpe strömungstechnisch mit der Pumpe verbunden und dafür ausgelegt ist, den stromabwärtigen Teil des Arbeitsmittels aufzunehmen;
einen zweiten Rekuperator (RC2), der mit dem zweiten Expansionsorgan strömungstechnisch verbunden und dafür ausgelegt ist, den vom zweiten Expansionsorgan kommenden stromabwärtigen Teil des Arbeitsmittels aufzunehmen;
einen mit dem ersten Rekuperator und dem zweiten Rekuperator strömungstechnisch verbundenen Kondensator (C), wobei das vom ersten Rekuperator und das vom zweiten Rekuperator ausgestoßene Arbeitsmittel vor dem Eintritt in den Kondensator zusammengeführt wird; und
ein Massenverwaltungssystem (100) mit einer vor dem ersten Expansionsorgan strömungstechnisch verbundenen ersten Systemanbindung (A) und einer vor der Pumpe strömungstechnisch verbundenen zweiten Systemanbindung (C), wobei das Massenverwaltungssystem einen Massenregeltank (7) aufweist, der dafür ausgelegt ist, das Arbeitsmittel über die erste Systemanbindung selektiv aus dem Arbeitsmittelkreislauf aufzunehmen und das Arbeitsmittel über die zweite Systemanbindung selektiv in den Arbeitsmittelkreislauf einzuspeisen.

2. Arbeitsmittelkreislauf gemäß Anspruch 1, wobei das zweite Expansionsorgan (PT2) dafür ausgelegt ist, die Pumpe (P) anzutreiben.

3. Der Arbeitsmittelkreislauf gemäß Anspruch 2 umfasst ferner eine Starterpumpe (SP), die mit der Abströmseite des Kondensators (C) und der Abströmseite der Pumpe (P) strömungstechnisch verbunden ist.

4. Arbeitsmittelkreislauf gemäß Anspruch 1, wobei das Arbeitsmittel Kohlendioxid umfasst.

5. Arbeitsmittelkreislauf gemäß Anspruch 4, wobei sich das Arbeitsmittel in einem Teil des Arbeitsmittelkreislaufs in einem überkritischen Zustand befindet.

6. Arbeitsmittelkreislauf gemäß Anspruch 1, wobei das erste und das zweite Expansionsorgan (PT1, PT2) Arbeitsturbinen sind.

7. Arbeitsmittelkreislauf gemäß Anspruch 1, wobei das Massenverwaltungssystem (100) eine Systemsteuerung (108) umfasst, die dafür ausgelegt ist, zumindest die Temperatur und/oder den Druck im Arbeitsmittelkreislauf zu erfassen und als Reaktion darauf Steuersignale für mindestens eine/s einer Vielzahl von im Arbeitsmittelkreislauf angeordneten selektiv betätigten Ventilen (14, 15, 16) und/oder Pumpen (9) zu erzeugen, wobei das Massenmanagementsystem dafür ausgelegt ist, einen Druck am Pumpeneinlass aufrechtzuerhalten, der zwischen einem (größeren als dem Sättigungsdruck des Arbeitsmittels) niedrigen Druckpegel und einem (größeren als dem niedrigen Druckpegel) hohen Druckpegel liegt.

8. Verfahren zur Abwärmenutzung in einem Arbeitsmittelkreislauf, umfassend:
ein Arbeitsmittel über eine Pumpe (P) durch einen Arbeitsmittelkreislauf pumpen, wobei das Arbeitsmittel in einen ersten Teil und einen nach der Pumpe liegenden getrennten Teil getrennt wird, wobei der erste Teil des Arbeitsmittels im Arbeitsmittelkreislauf zu einem mit der Pumpe strömungstechnisch verbundenen Abwärmetauscher (WHX) gepumpt und der getrennte Teil des Arbeitsmittels durch einen ersten Rekuperator (RC1) gepumpt wird;
Wärmeenergie vom ersten Rekuperator an den getrennten Teil des Arbeitsmittels übertragen;
den ersten Teils des Arbeitsmittels im mit dem Abwärmetauscher strömungstechnisch verbundenen ersten Expansionsorgan (PT1) expandieren;
die Wärmeenergie vom ersten Teil des Arbeitsmittels auf den getrennten Teil des Arbeitsmittels im strömungstechnisch mit dem ersten Expansionsorgan verbundenen zweiten Rekuperator (RC2) zu übertragen, wobei der zweite Rekuperator dafür ausgelegt ist, den getrennten Teil des Arbeitsmittels hinter dem ersten Rekuperator aufzunehmen;
den separaten Teil des Arbeitsmittels im zweiten Expansionsorgan (PT2) zu expandieren, wobei das zweite Expansionsorgan dafür ausgelegt ist, den vom zweiten Rekuperator getrennten Teil aufzunehmen;
den ersten Teil und den getrennten Teil des Arbeitsmittels wieder zusammenführen und durch den ersten Rekuperator und einen Kondensator (C) schicken, wobei der Kondensator mit dem ersten Rekuperator strömungstechnisch verbunden ist; und
die Größe der Arbeitsmittelmasse im Arbeitsmittelkreislauf durch ein Massenverwaltungssystem (100) steuern, das einen mit der ersten Systemanbindung (B) und der zweiten Systemanbindung (C) strömungstechnisch verbundenen Massenregeltank (7) aufweist, wobei die erste Systemanbindung strömungstechnisch vor dem ersten Expansionsorgan und die zweite Systemanbindung strömungstechnisch vor der Pumpe angebunden ist.

9. Verfahren gemäß Anspruch 8, ferner umfassend:
das Arbeitsmittel aus dem Arbeitsmittelkreislauf im Massenregeltank (7) über die erste Systemanbindung (B) aufnehmen; und
das Arbeitsmittel in den Arbeitsmittelkreislauf über die zweite Systemanbindung (C) zuführen.

10. Verfahren gemäß Anspruch 9, ferner umfassend den Arbeitsmittelfluss in den Arbeitsmittelkreislauf und zur Pumpe (P) über ein Steuersystem (108) regeln, wobei das Steuersystem dafür ausgelegt ist, einen Druck am Pumpeneinlass aufrechtzuerhalten, der zwischen einem (größeren als dem Sättigungsdruck des Arbeitsmittels) niedrigen Druckpegel und einem (größeren als dem niedrigen Druckpegel) hohen Druckpegel liegt.

11. Verfahren gemäß Anspruch 8, wobei das Arbeitsmittel Kohlendioxid umfasst.

12. Verfahren gemäß Anspruch 11, wobei sich das Arbeitsmittel in einem Teil des Arbeitsmittelkreislaufs in einem überkritischen Zustand befindet.

## Revendications

1. Un circuit de fluide de travail pour la récupération de chaleur perdue, comprenant :
une pompe (P) destinée à diriger un fluide de travail dans le circuit de fluide de travail vers un échangeur de chaleur perdue (WHX) couplé fluidiquement à la pompe ;
un premier dispositif d'expansion (PT1) couplé fluidiquement à l'échangeur de chaleur perdue et configuré pour recevoir le fluide de travail de l'échangeur de chaleur perdue ;
un premier récupérateur (RC1) couplé fluidiquement au premier dispositif d'expansion et configuré pour recevoir le fluide de travail du premier dispositif d'expansion et transférer la chaleur du fluide de travail vers une partie en aval du fluide de travail ;
un deuxième dispositif d'expansion (PT2) couplé fluidiquement à la pompe en aval de la pompe et configuré pour recevoir la partie en aval du fluide de travail ;
un deuxième récupérateur (RC2) couplé fluidiquement au deuxième dispositif d'expansion et configuré pour recevoir la partie en aval du fluide de travail du deuxième dispositif d'expansion ;
un condenseur (C) couplé fluidiquement au premier récupérateur et au deuxième récupérateur, dans lequel les décharges de fluide de travail du premier récupérateur et du deuxième récupérateur sont combinées avant d'entrer dans le condenseur ; et
un système de gestion de masse (100) ayant un premier raccordement de système (A) couplé fluidiquement en amont du premier dispositif d'expansion et un deuxième raccordement de système (C) couplé fluidiquement en amont de la pompe, le système de gestion de masse ayant un réservoir de contrôle de masse (7) configuré pour recevoir sélectivement le fluide de travail du circuit de fluide de travail via le premier raccordement de système et pour entrer sélectivement le fluide de travail dans le circuit de fluide de travail via le deuxième raccordement de système.

2. Le circuit de fluide de travail selon la revendication 1, dans lequel le deuxième dispositif d'expansion (PT2) est configuré pour entraîner la pompe (P).

3. Le circuit de fluide de travail selon la revendication 2, comprenant en outre une pompe de démarrage (SP) couplée fluidiquement à un côté en aval du condenseur (C) et à un côté en aval de la pompe (P).

4. Le circuit de fluide de travail selon la revendication 1, dans lequel le fluide de travail comprend du dioxyde de carbone.

5. Le circuit de fluide de travail selon la revendication 4, dans lequel le fluide de travail est dans un état supercritique à travers une partie du circuit de fluide de travail.

6. Le circuit de fluide de travail selon la revendication 1, dans lequel les premier et deuxième dispositifs d'expansion (PT1, PT2) sont des turbines de puissance.

7. Le circuit de fluide de travail selon la revendication 1, dans lequel le système de gestion de masse (100) comprend un contrôleur de système (108) configuré pour détecter au moins une température et une pression dans le circuit de fluide de travail, et en réponse à cela, générer des signaux de contrôle pour au moins une de la pluralité des valves à actionnement sélectif (14, 15, 16) et/ou pompes (9) disposées dans le circuit de fluide de travail, le système de gestion de masse étant configuré pour maintenir une pression à une entrée de la pompe entre un faible niveau de pression supérieur à une pression de saturation du fluide de travail et un haut niveau de pression supérieur au bas niveau de pression.

8. Un procédé de récupération de la chaleur perdue dans un circuit de fluide de travail, comprenant :
le pompage d'un fluide de travail dans le circuit de fluide de travail par une pompe (P), le fluide de travail étant séparé en une première partie et une partie séparée en aval de la pompe, dans lequel la première partie du fluide de travail dans le circuit de fluide de travail est pompée vers un échangeur de chaleur perdue (WHX) couplé fluidiquement à la pompe et la partie séparée du fluide de travail est pompée à travers un premier récupérateur (RC1) ;
le transfert de l'énergie thermique du premier récupérateur vers la partie séparée du fluide de travail ;
l'expansion de la première partie du fluide de travail dans un premier dispositif d'expansion (PT1) couplé fluidiquement à l'échangeur de chaleur perdue ;
le transfert de l'énergie thermique de la première partie du fluide de travail vers la partie séparée du fluide de travail dans un deuxième récupérateur (RC2) couplé fluidiquement au premier dispositif d'expansion, le deuxième récupérateur étant configuré pour recevoir la partie séparée du fluide de travail suivant le premier récupérateur ;
l'expansion de la partie séparée du fluide de travail dans un deuxième dispositif d'expansion (PT2) configuré pour recevoir la partie séparée du deuxième récupérateur ;
la recombinaison de la première partie et de la partie séparée du fluide de travail pour passer à travers le premier récupérateur et un condenseur (C), le condenseur étant couplé fluidiquement au premier récupérateur ; et
le contrôle d'une quantité de masse de fluide de travail dans le circuit de fluide de travail avec un système de gestion de masse (100) ayant un réservoir de contrôle de masse (7) couplé fluidiquement à un premier raccordement de système (B) et à un deuxième raccordement de système (C), le premier raccordement de système étant couplé fluidiquement en amont du premier dispositif d'expansion et le deuxième raccordement de système étant couplé fluidiquement en amont de la pompe.

9. Le procédé selon la revendication 8, comprenant en outre :
la réception du fluide de travail du circuit de fluide de travail dans le réservoir de contrôle de masse (7) via le premier raccordement de système (B) ; et
l'entrée du fluide de travail dans le circuit de fluide de travail via le deuxième raccordement de système (C).

10. Le procédé selon la revendication 9, comprenant en outre le contrôle avec un système de contrôle (108) d'un écoulement de fluide de travail vers le circuit de fluide de travail et vers la pompe (P), le système de contrôle étant configuré pour maintenir une pression à une entrée de la pompe entre un faible niveau de pression supérieur à une pression de saturation du fluide de travail et un haut niveau de pression supérieur au bas niveau de pression.

11. Le procédé selon la revendication 8, dans lequel le fluide de travail comprend du dioxyde de carbone.

12. Le procédé selon la revendication 11, dans lequel le fluide de travail est dans un état supercritique à travers une partie du circuit de fluide de travail.
